# EUROPEAN PATENT SPECIFICATION

(11) **EP 2 881 481 B1**
(45) Date of publication and mention of the grant of the patent: **03.04.2019**
(21) Application number: 12882412.5
(22) Date of filing: 31.07.2012
(51) Int. Cl.: C22C 38/00, C22C 38/02, C22C 38/04, C22C 38/06, C22C 38/12, C22C 38/14, C22C 38/38, C22C 38/16, C22C 38/08, C23C 2/02, C23C 2/06, C23C 2/28, C21D 9/46, B32B 15/01, C21D 1/20, C21D 1/22, C21D 8/02, C21D 6/00, C23C 2/26

(54) **HIGH-STRENGTH HOT-DIP GALVANIZED STEEL SHEET HAVING EXCELLENT MOLDABILITY AND SHAPE FIXABILITY, AND METHOD FOR MANUFACTURING SAME**
HOCHFESTES FEUERVERZINKTES STAHLBLECH MIT AUSGEZEICHNETER FORMBARKEIT UND FORMFESTIGKEIT SOWIE HERSTELLUNGSVERFAHREN DAFÜR
TÔLE D'ACIER GALVANISÉE PAR IMMERSION À CHAUD À RÉSISTANCE ÉLEVÉE QUI PRÉSENTE UNE EXCELLENTE APTITUDE AU MOULAGE ET UNE EXCELLENTE APTITUDE À LA FIXATION DE FORMES, AINSI QUE PROCÉDÉ DE FABRICATION DE CETTE DERNIÈRE

(43) Date of publication of application: 10.06.2015
(73) Proprietor: JFE Steel Corporation, Tokyo 100-0011 (JP)
(72) Inventor: HASEGAWA, Hiroshi, Tokyo 100-0011 (JP); KANEKO, Shinjiro, Tokyo 100-0011 (JP); NAGATAKI, Yasunobu, Tokyo 100-0011 (JP)
(74) Representative: Haseltine Lake LLP
(86) International application number: PCT/JP2012/004863
(87) International publication number: WO 2014/020640

(56) References cited:
- EP-A1- 2 202 327
- EP-A1- 2 258 886
- EP-A1- 2 267 176
- EP-A1- 2 325 346
- WO-A1-2010/029983
- WO-A1-2011/111330
- WO-A1-2011/111333
- JP-A- 2003 096 541
- JP-A- 2003 171 735
- JP-A- 2009 209 450
- JP-A- 2010 275 608
- JP-A- 2011 184 757
- JP-A- 2012 031 462
- JP-A- 2012 122 093

## Description

### [Technical Field]

The present invention relates to a high-strength galvanized steel sheet with excellent formability and shape fixability which can be suitably used as an automotive steel sheet and to a method for manufacturing the high-strength galvanized steel sheet.

### [Background Art]

Nowadays, it is an important issue to increase the fuel efficiency of automobiles from the viewpoint of global environment conservation. Therefore, there is an active trend toward increasing the fuel efficiency due to decrease in the weight of automobiles by increasing the strength of automotive materials and decreasing the thickness of automotive materials. Steel sheets which are formed into products such as automotive parts by performing press forming or bend forming are required to have sufficient formability so that the steel sheets can be subjected to such forming while sufficient strength is maintained. In Patent Literature 1, high strength and high formability are achieved at the same time by utilizing tempered martensite phase and retained austenite phase. However, there is generally a problem in that, with increasing strength of steel sheets, springback after forming increases, resulting in a decrease in shape fixability. In the case of Patent Literature 1, since no consideration is given to shape fixability, there is room for improvement. On the other hand, in Patent Literature 2, a steel sheet having a low YR and excellent shape fixability is obtained by utilizing a microstructure comprising ferrite phase, bainite phase, and austenite phase which has a low C concentration. However, since stretch flangeability is not evaluated, it is difficult to say that the steel sheet has sufficient formability. In Patent Literature 3, although high strength and high ductility are achieved at the same time by utilizing tempered martensite phase, bainite phase, and retained austenite phase, there is no mention of shape fixability. In addition, since the absolute value of criterion evaluating stretch flangeability is not necessarily large, there is room for improvement.

Patent Literature 4 discloses a steel sheet having TS: 590MPa or more, excellent stretch flangeability and high ductility, but teaches that a balance between TS and El is deteriorated when the area% of ferrite is less than 20%. Patent Literature 5 discloses a steel sheet having an excellent formability (stretch flangeability and total elongation), but TS is relatively low, so the steel sheet does not have a high-strength and excellent shape fixability at the same time.
Patent Literature 6 discloses a high-strength steel sheet having a high YS and excellent formability, in which the microstructure contains, by area ratio, 10-60% tempered martensite, 5-50% ferrite, 5-30% bainite, 5-30% retained austenite and 0-20% total of pearlite and martensite.
Patent Literature 7 discloses a high-strength press member with excellent elongation in which the microstructure contains martensite, retained martensite, and bainite containing bainitic ferrite, the area ratio of said martensite with respect to the entire microstructure of the steel sheet is in the range of 10% to 85%, at least 25% of said martensite is tempered martensite, content of retained austenite is in the range of 5% to 40%, area ratio of said bainitic ferrite in said bainite with respect to the entire microstructure of the steel sheet is at least 5%, the total of area ratios of said martensite, said retained austenite, and said bainitic ferrite in said bainite with respect to the entire microstructure of the steel sheet is at least 65%, and the average carbon concentration in the retained austenite is at least 0.65 mass %.

### [Citation List]

### [Patent Literature]

[PTL 1] Japanese Unexamined Patent Application Publication No. 2009-209450
[PTL 2] Japanese Unexamined Patent Application Publication No. 2010-126808
[PTL 3] Japanese Unexamined Patent Application Publication No. 2010-90475 and EP 2 325 346 A1
[PTL 4] EP 2 258 886 A1
[PTL 5] JP 2003 171735 A
[PTL 6] JP 2012 122093 A
[PTL 7] WO 2011/111333 A1

### [Summary of Invention]

### [Technical Problem]

An object of the present invention is, by advantageously solving the problems of the related arts described above, to provide a high-strength galvanized steel sheet with excellent formability and shape fixability which can be suitably used as an automotive material and which has a tensile strength (TS) of 1180 MPa or more, a total elongation (EL) of 14% or more, a hole expansion ratio (λ) of 30% or more, and a yield ratio (YR) of 70% or less and to provide a method for manufacturing the high-strength galvanized steel sheet. Here, the yield ratio (YR) is the ratio of the yield strength (YS) to the tensile strength (TS) and expressed as YR (%) = (YS/TS) × 100.

### [Solution to Problem]

The present inventors diligently conducted investigations regarding the chemical composition and the microstructure of steel sheet in order to achieve the object described above and to manufacture a high-strength galvanized steel sheet with excellent formability and shape fixability, and, as a result, obtained the following finding.

It is possible to achieve not only high strength but also high formability and high shape fixability by appropriately controlling the chemical composition and by forming the microstructure including, in terms of area ratio, 0% or more and 5% or less of polygonal ferrite phase, 5% or more of bainitic ferrite phase, 5% or more and 20% or less of martensite phase, 30% or more and 60% or less of tempered martensite phase, and 5% or more and 20% or less of retained austenite phase, in which an average prior-austenite grain diameter is 15 µm or less.

Although it is not necessarily clear why there is an increase in shape fixability as a result of the martensite phase dispersing in the microstructure mainly including the tempered martensite phase, it is considered that movable dislocations are formed in the tempered martensite phase due to austenite phase which is in contact with the tempered martensite phase undergoing martensite transformation at the cooling after galvanization or after alloying treatment, and thereby there is a decrease in YR. Also, although it is not clear why there is an increase in λ as a result of decrease in prior-austenite grain diameter, it is considered that there is a decrease in average grain diameter in the microstructure after annealing as a result of decrease in prior-austenite grain diameter, and thereby coupling of cracks is suppressed due to increase in the number of crack propagation paths when stretch flange forming is performed.

Such a microstructure is obtained when annealing is performed by heating a steel sheet up to (the Ac₃ point - 20°C) or higher and 1000°C or lower at an average heating rate of 5°C/s or more in a temperature range from 500°C to the Ac₁ point, holding the heated steel sheet at the heating temperature for 10 seconds or more and 1000 seconds or less, cooling the heated steel sheet down to a cooling stop temperature of (the Ms point - 80°C) or higher and (the Ms point - 30°C) or lower at an average cooling rate of 15°C/s or more in a temperature range of 750°C or lower, reheating the cooled steel sheet up to 350°C or higher and 500°C or lower, and holding the reheated steel sheet at the reheating temperature for 10 seconds or more and 600 seconds or less.

The present invention has been completed on the basis of the finding described above and is provided as follows.
(1) A high-strength galvanized steel sheet with excellent formability and shape fixability, the steel sheet having a chemical composition consisting of, by mass%, C: 0.10% or more and 0.35% or less, Si: 0.5% or more and 3.0% or less, Mn: 1.5% or more and 4.0% or less, P: 0.100% or less, S: 0.02% or less, Al: 0.010% or more and 0.5% or less, optionally further containing, by mass%, any one or more of:
   at least one chemical element selected from Cr: 0.005% or more and 2.00% or less, Mo: 0.005% or more and 2.00% or less, V: 0.005% or more and 2.00% or less, Ni: 0.005% or more and 2.00% or less, and Cu: 0.005% or more and 2.00% or less;
   at least one chemical element selected from Ti: 0.01% or more and 0.20% or less, and Nb: 0.01% or more and 0.20% or less;
      B: 0.0005% or more and 0.0050% or less; and
      at least one chemical element selected from Ca: 0.001% or more and 0.005% or less, and REM: 0.001% or more and 0.005% or less,
   the balance being Fe and inevitable impurities;
   the steel sheet having a microstructure consisting of, in terms of area ratio, 0% or more and 5% or less of polygonal ferrite phase, 5% or more of bainitic ferrite phase, 5% or more and 20% or less of martensite phase, 30% or more and 60% or less of tempered martensite phase, 5% or more and 20% or less of retained austenite phase, and optionally pearlite,
   wherein an average prior-austenite grain diameter is between 5 µm and 15 µm, and the steel sheet has a tensile strength of 1180MPa or more and a yield ratio of 70% or less.
(2) The high-strength galvanized steel sheet with excellent formability and shape fixability according to (1), wherein the galvanized steel sheet is a galvannealed steel sheet.
(3) A method for manufacturing the high-strength galvanized steel sheet with excellent formability and shape fixability according to (1) or (2) above, the method comprising;
   hot rolling, or further cold rolling, a slab having the chemical composition according to (1) into a rolled steel sheet,
   continuous annealing the rolled steel sheet by heating up to (the Ac₃ point - 20°C) or higher and 1000°C or lower at an average heating rate of 5°C/s or more in a temperature range from 500°C to the Ac₁ point, holding at the heating temperature for 10 seconds or more and 1000 seconds or less, cooling down to a cooling stop temperature of (the Ms point - 80°C) or higher and (the Ms point - 30°C) or lower at an average cooling rate of 15°C/s or more in a temperature range of 750°C or lower, reheating up to 350°C or higher and 500°C or lower, and holding at the reheating temperature for 10 seconds or more and 600 seconds or less, and
   galvanizing the annealed steel sheet, or further performing alloying treatment on the galvanized steel sheet to produce a galvannealed steel sheet.

### [Advantageous Effects of Invention]

According to the present invention, it is possible to obtain a high-strength galvanized steel sheet with excellent formability and shape fixability which has a tensile strength (TS) of 1180 MPa or more, a total elongation (EL) of 14% or more, a hole expansion ratio (λ) of 30% or more, and a yield ratio (YR) of 70% or less.

### [Description of Embodiments]

The present invention will be described in detail hereafter. Here, "%" used for exhibiting the content of each chemical element represents "mass%", unless otherwise noted.

### 1) Chemical composition

### C: 0.10% or more and 0.35% or less

C is a chemical element which is necessary to increase TS by forming low-temperature-transformation phase such as martensite phase and tempered martensite phase. In the case where the C content is less than 0.10%, it is difficult to ensure, in terms of area ratio, 30% or more of tempered martensite phase and 5% or more of martensite phase. On the other hand, in the case where the C content is more than 0.35%, there is a decrease in EL and spot welding performance. Therefore, the C content is set to be 0.10% or more and 0.35% or less, preferably 0.15% or more and 0.3% or less.

### Si: 0.5% or more and 3.0% or less

Si is a chemical element which is effective for improving a TS-EL balance through solid-solution hardening of steel and for forming retained austenite phase. In order to realize such effects, it is necessary that the Si content be 0.5% or more. On the other hand, in the case where the Si content is more than 3.0%, there is a decrease in EL and there is a deterioration in surface quality and weldability. Therefore, the Si content is set to be 0.5% or more and 3.0% or less, preferably 0.9% or more and 2.0% or less.

### Mn: 1.5% or more and 4.0% or less

Mn is a chemical element which is effective for increasing the strength of steel and which promotes the formation of low-temperature-transformation phase such as martensite phase. In order to realize such effects, it is necessary that the Mn content be 1.5% or more. On the other hand, in the case where the Mn content is more than 4.0%, there is a decrease in formability due to a significant decrease in EL. Therefore, the Mn content is set to be 1.5% or more and 4.0% or less, preferably 2.0% or more and 3.5% or less.

### P: 0.100% or less

Since P degrades the mechanical properties and weldability of steel through grain boundary segregation, it is preferable that the P content be as small as possible. However, the P content is set to be 0.100% or less from the viewpoint of, for example, manufacturing cost.

### S: 0.02% or less

Since S degrades weldability as a result of being present in the form of inclusions such as MnS, it is preferable that the S content be as small as possible. However, the S content is set to be 0.02% or less from the viewpoint of manufacturing cost.

### Al: 0.010% or more and 0.5% or less

Since Al functions as a deoxidation agent, it is preferable that Al is added in a deoxidation process. In order to realize such an effect, it is necessary that the Al content be 0.010% or more. On the other hand, in the case where the Al content is more than 0.5%, there is an increased risk of slab cracks occurring at continuous casting. Therefore, the Al content is set to be 0.010% or more and 0.5% or less.

Although the balance of the chemical composition is Fe and inevitable impurities, one or more of chemical elements described below may be added by necessity.

At least one chemical element selected from Cr: 0.005% or more and 2.00% or less, Mo: 0.005% or more and 2.00% or less, V: 0.005% or more and 2.00% or less, Ni: 0.005% or more and 2.00% or less, and Cu: 0.005% or more and 2.00% or less

Cr, Mo, V, Ni, and Cu are chemical elements which are effective for forming low-temperature-transformation phase such as martensite phase. In order to realize such an effect, it is necessary that the content of each of Cr, Mo, V, Ni, and Cu be 0.005% or more. On the other hand, in the case where the content of each of Cr, Mo, V, Ni, and Cu is more than 2.00%, the effect becomes saturated and there is an increase in cost. Therefore, the content of each of Cr, Mo, V, Ni and Cu is set to be 0.005% or more and 2.00% or less.

Moreover, at least one chemical element selected from Ti: 0.01% or more and 0.20% or less, and Nb: 0.01% or more and 0.20% or less may be added.

Ti and Nb are chemical elements which are effective for increasing the strength of steel through precipitation hardening of steel as a result of forming carbonitrides. In order to realize such an effect, it is necessary that the content of each of Ti and Nb be 0.01% or more. On the other hand, in the case where the content of each of Ti and Nb is more than 0.20%, the effect of increasing the strength of steel becomes saturated and there is a decrease in EL. Therefore, the content of each of Ti and Nb is set to be 0.01% or more and 0.20% or less.

Furthermore, B: 0.0005% or more and 0.0050% or less may be added.

B is a chemical element which is effective for forming low-temperature-transformation phase as a result of suppressing the formation of ferrite phase from austenite grain boundaries. In order to realize such an effect, it is necessary that the B content be 0.0005% or more. On the other hand, in the case where the B content is more than 0.0050%, the effect becomes saturated and there is an increase in cost. Therefore, the B content is set to be 0.0005% or more and 0.0050% or less.

Moreover, at least one chemical element selected from Ca: 0.001% or more and 0.005% or less, and REM: 0.001% or more and 0.005% or less may be added.

Both Ca and REM are chemical elements which are effective for increasing formability through sulfide shape control. In order to realize such an effect, it is necessary that the content of each of Ca and REM be 0.001% or more. On the other hand, in the case where the content of each of Ca and REM is more than 0.005%, since there is a negative influence on the cleanliness of steel, there is concern that the desired properties might not be achieved. Therefore, the content of each of Ca and REM is set to be 0.001% or more and 0.005% or less.

### 2) Microstructure

### Area ratio of polygonal ferrite phase: 0% or more and 5% or less

In the case where the area ratio of polygonal phase is more than 5%, it is difficult to achieve a TS of 1180 MPa or more and a hole expansion ratio of 30% or more at the same time. Therefore, the area ratio of polygonal ferrite phase is set to be 0% or more and 5% or less.

### Area ratio of bainitic ferrite phase: 5% or more

Bainitic transformation is effective for ensuring retained austenite phase, which is effective for increasing EL, as a result of stabilizing austenite phase by concentrating C in austenite phase. In order to realize such an effect, it is necessary that the area ratio of bainitic ferrite phase be 5% or more. On the other hand, in the case where the area ratio is more than 60%, since it is difficult to ensure desired martensite phase and retained austenite phase, it is preferable that the area ratio of bainitic ferrite phase be 5% or more and 60% or less.

### Area ratio of martensite phase: 5% or more and 20% or less

Martensite phase is effective for increasing TS and decreasing YR.

In order to realize such an effect, it is necessary that the area ratio of martensite phase be 5% or more. On the other hand, in the case where the area ratio is more than 20%, there is a significant decrease in EL and hole expansion ratio. Therefore, the area ratio of martensite phase is set to be 5% or more and 20% or less.

### Area ratio of tempered martensite phase: 30% or more and 60% or less

In the case where the area ratio of tempered martensite phase is less than 30%, it is difficult to achieve a TS of 1180 MPa or more and a hole expansion ratio of 30% or more at the same time. On the other hand, in the case where the area ratio is more than 60%, there is a decrease in shape fixability due to a significant increase in YR. Therefore, the area ratio of tempered martensite phase is set to be 30% or more and 60% or less. In addition, the hardness of tempered martensite phase in the present invention is 250 or more in terms of Vickers hardness.

### Area ratio of retained austenite phase: 5% or more and 20% or less

Retained austenite phase is effective for increasing EL. In order to realize such an effect, it is necessary that the area ratio of retained austenite phase be 5% or more. However, in the case where the area ratio is more than 20%, there is a significant decrease in hole expansion ratio. Therefore, the area ratio of retained austenite phase is set to be 5% or more and 20% or less.

### Average prior-austenite grain diameter: 5 to 15 µm

It is effective to make prior-austenite grains fine in order to increase λ. In order to realize such an effect, it is necessary that an average prior-austenite grain diameter be 15 µm or less. Therefore, the average prior-austenite grain diameter is set to be 15 µm or less. Since there is a risk of increase in YR in the case where the average prior-austenite grain diameter is excessively small, the average prior-austenite grain diameter is 5 µm or more.

Note that, although there is a case where pearlite phase is included in addition to polygonal ferrite phase, bainitic ferrite phase, martensite phase, tempered martensite phase, and retained austenite phase, the object of the present invention is achieved as long as the conditions for the microstructure described above are satisfied.

Here, the area ratio of each of polygonal ferrite phase, bainitic ferrite phase, martensite phase, and tempered martensite phase means the ratio of the area constituted by respective phase to the total area of observed field, and the area ratio of each phase was measured using a method described hereafter. By polishing the cross section in the thickness direction of steel sheet, etching the polished cross section using a 3% nital solution, taking the photographs of three microscopic fields in a portion located at 1/4 of the thickness using a SEM (scanning electron microscope) at a magnification of 1500 times, distinguishing each phase concerned in each field by the difference in color using Image-Pro manufactured by Media Cybernetics, Inc., and calculating the ratio of the area constituted by each phase concerned to the total area of each field, the average value of the area ratios of each phase concerned in the three fields was defined as the area ratio of each phase. In addition, as for the area ratio of retained austenite phase, by polishing a steel sheet down to a portion located at 1/4 of the thickness, further removing a thickness of 0.1 mm by performing chemical polishing, determining the integrated intensities of (200), (220), and (311) planes of fcc-iron and (200), (211), and (220) planes of bcc-iron using Kα-ray of Mo of an X-ray diffractometer, and calculating the ratio of retained austenite phase from the determined intensities, this ratio was defined as the area ratio of retained austenite phase. In addition as for an average prior-austenite grain diameter, by polishing the cross section in the thickness direction of steel sheet, etching the polished cross section using a 3% nital solution, observing a portion located at 1/4 of the thickness using a SEM (scanning electron microscope) at a magnification of 1500 times, deriving an average area by dividing the total area enclosed by prior-austenite grain boundaries by the number of prior-austenite grains in the microscopic field, the square root of the average area was defined as an average prior-austenite grain diameter.

### 3) Manufacturing conditions

The high-strength galvanized steel sheet according to the present invention is manufactured in a manner described below. First, hot rolling and pickling, or further cold rolling, are performed on a slab having the chemical composition described above. Subsequently, using a continuous annealing process, the rolled steel sheet is heated up to (the Ac₃ point - 20°C) or higher and 1000°C or lower at an average heating rate of 5°C/s or more in a temperature range from 500°C to the Ac₁ point, held at the heating temperature for 10 seconds or more and 1000 seconds or less, and cooled down to a cooling stop temperature of (the Ms point - 80°C) or higher and (the Ms point - 30°C) or lower at an average cooling rate of 15°C/s or more in a temperature range of 750°C or less. Moreover, the cooled steel sheet is reheated up to 350°C or higher and 500°C or lower, and held at the reheating temperature for 10 seconds or more and 600 seconds or less. Then, the annealed steel sheet is galvanized, or further alloying treatment is performed on the galvanized steel sheet to produce a galvannealed steel sheet. The details of the manufacturing conditions will be described hereafter.

Steel having the chemical composition described above is smelted and cast into a slab, and, after the slab is subjected to hot rolling, the hot-rolled steel sheet is cooled and coiled. In the case where the coiling temperature after hot rolling is higher than 650°C, black stains occur, resulting in a decrease in coatability in a subsequent galvanizing process. On the other hand, in the case where the coiling temperature is lower than 400°C, there is a deterioration in the shape of hot-rolled steel sheet. Therefore, it is preferable that the coiling temperature after hot rolling be 400°C or higher and 650°C or lower.

Subsequently, it is preferable that the hot-rolled steel sheet is pickled in order to remove scale from the surface. There is no particular limitation on a pickling method, and a common method may be used. The pickled hot-rolled steel sheet is further cold-rolled as needed. There is no particular limitation on a cold rolling method, and a common method may be used. The pickled hot-rolled steel sheet or the cold-rolled steel sheet is subjected to continuous annealing under the conditions described below.

### Average heating rate in a temperature range from 500°C to the Ac₁ point: 5°C/s or more

In the case where the average heating rate in a temperature range from 500°C to the Ac₁ point is less than 5°C/s, since there is an increase in austenite grain diameter due to recrystallization, the microstructure according to the present invention cannot be achieved. Therefore, the average heating rate in a temperature range from 500°C to the Ac₁ point is set to be 5°C/s or more.

Heating temperature: (the Ac₃ point - 20°C) or higher and 1000°C or lower, and holding time: 10 seconds or more and 1000 seconds or less

In the case where the heating (soaking) temperature is lower than (the Ac₃ point - 20°C), since there is an insufficient amount of austenite phase formed, the microstructure according to the present invention cannot be achieved. On the other hand, in the case where the heating temperature is higher than 1000°C, since there is an increase in austenite grain diameter, which increases the grain diameter of the constituent phases after annealing, there is a decrease in, for example, toughness. Therefore, the heating temperature is set to be (the Ac₃ point - 20°C) or higher and 1000°C or lower. In the case where the holding time at the heating temperature is less than 10 seconds, since there is an insufficient amount of austenite phase formed, the microstructure according to the present invention cannot be achieved. In addition, in the case where the holding time is more than 1000 seconds, there is an increase in cost. Therefore, the holding time at the heating temperature is set to be 10 seconds or more and 1000 seconds or less.

Cooling down to (the Ms point - 80°C) or higher and (the Ms point - 30°C) or lower at an average cooling rate of 15°C/s or more in a temperature range of 750°C or less

In the case where the average cooling rate for cooling down to (the Ms point - 80°C) or higher and (the Ms point - 30°C) or lower in a temperature range of 750°C or less is less than 15°C/s, since a large amount of ferrite phase is formed during cooling, the microstructure according to the present invention cannot be achieved. Therefore, the average cooling rate is set to be 15°C/s or more.

### Cooling stop temperature: (the Ms point - 80°C) or higher and (the Ms point - 30°C) or lower

When cooling is performed down to a cooling stop temperature, some of austenite phase transforms into martensite phase, and, subsequently, when reheating is performed or when alloying treatment is performed after galvanizing, the martensite phase transforms into tempered martensite phase and the untransformed austenite phase transforms into retained austenite phase, martensite phase, or bainite phase. At this time, in the case where the cooling stop temperature is higher than (the Ms point - 30°C), there is an insufficient amount of tempered martensite phase, and, in the case where the cooling stop temperature is lower than (the Ms point - 80°C), since there is a significant decrease in the amount of untransformed austenite phase, and since there is an increase in the amount of tempered martensite phase, the microstructure according to the present invention cannot be achieved. Therefore, the cooling stop temperature is set to be (the Ms point - 80°C) or higher and (the Ms point - 30°C) or lower.

### Reheating temperature: 350°C or higher and 500°C or lower

After cooling down to the cooling stop temperature, when reheating is performed up to 350°C or higher and 500°C or lower, the martensite phase formed at cooling is subjected to tempering so that tempered martensite is formed, and C is concentrated in untransformed austenite phase so that the untransformed austenite phase is stabilized in the form of retained austenite phase. In addition, since bainite transformation proceeds, the untransformed austenite phase is further stabilized due to the diffusion of C from bainitic ferrite phase. In the case where the reheating temperature is lower than 350°C, since the proceeding bainite transformation forms bainite phase containing carbides, C is not sufficiently concentrated in the untransformed austenite phase, which results in the retained austenite phase not being sufficiently stabilized. On the other hand, in the case where the reheating temperature is higher than 500°C, since the untransformed austenite phase tends to form carbides or to undergo pearlite transformation, the microstructure according to the present invention cannot be achieved. Therefore, the reheating temperature is set to be 350°C or higher and 500°C or lower, preferably 380°C or higher and 480°C or lower.

### Holding time at the reheating temperature: 10 seconds or more and 600 seconds or less

Since there is insufficient bainite phase formed in the case where the holding time is less than 10 seconds, and, since the untransformed austenite phase tends to form carbides or to undergo pearlite transformation in the case where the holding time is more than 600 seconds, the microstructure according to the present invention cannot be achieved. Therefore, the holding time at the reheating temperature is set to be 10 seconds or more and 600 seconds or less.

It is preferable that galvanization be performed by dipping the annealed steel sheet obtained as described above in a galvanizing bath having a temperature of 440°C or higher and 500°C or lower and subsequently controlling coating weight using, for example, a gas wiping method. Moreover, in the case where alloy treatment is performed on the galvanized steel sheet to produce a galvannealed steel sheet, it is preferable that alloying treatment be performed by heating the galvanized steel sheet in a temperature range of 460°C or higher and 550°C or lower for 1 second or more and 40 seconds or less. It is preferable that galvanization be performed using a galvanizing bath having an Al content of 0.08% to 0.18%.

Skin pass rolling may be performed on the galvannealed steel sheet in order to perform, for example, shape correction and surface roughness control. In addition, various coating treatments such as resin coating and oil coating may also be performed.

Although there is no particular limitation on other manufacturing conditions, it is preferable that the conditions described below be used.

Although it is preferable that a slab be cast using a continuous casting method in order to prevent macro segregation, an ingot-making method or a thin slab casting method may also be used. In order to perform hot rolling on the slab, hot rolling may be performed after the slab has been cooled down to room temperature and then reheated, or hot rolling may be performed after the slab is charged into a heating furnace without being cooled down to room temperature. Moreover, an energy saving process, in which hot rolling is performed promptly after the slab has been subjected to heat-retention for a short time, may be used. In the case where the slab is heated, it is preferable that the slab be heated up to a temperature of 1100°C or higher in order to dissolve carbides and to prevent an increase in rolling load. In addition, it is preferable that the slab heating temperature be 1300°C or lower in order to prevent an increase in scale loss.

When hot rolling is performed on the slab, a sheet bar after roughing rolling may be heated in order to prevent troubles from occurring when hot rolling is performed even in the case where a slab heating temperature is low. In addition, a so-called continuous rolling process, in which sheet bars are connected in order to continuously perform finishing rolling, may be used. Since there might be a decrease in formability after cold rolling and annealing due to an increase in anisotropy, it is preferable that finishing rolling temperature be equal to or higher than the Ar₃ point. In addition, it is preferable that lubrication rolling be performed so that a friction coefficient is 0.10 to 0.25 in all or some of the passes in finishing rolling in order to decrease rolling load and to homogenize the shape and the mechanical properties of the steel sheet.

After scale has been removed from the hot-rolled steel sheet using, for example, a pickling method, the hot-rolled steel sheet is annealed under the conditions described above, or, after the hot-rolled steel sheet is further subjected to cold rolling, the cold-rolled steel sheet is annealed under the conditions described above, and then, galvanization is performed. In the case where cold rolling is performed, it is preferable that cold rolling reduction rate be 40% or more. In addition, annealing for the hot-rolled steel sheet may be performed in order to decrease cold rolling load when cold rolling is performed.

### [EXAMPLES]

Steels having the chemical composition given in Table 1 were smelted using a converter and cast into steel slabs using a continuous casting method (N is one of inevitable impurities in Table 1). By heating these slabs up to a temperature of 1200°C, performing roughing rolling on the heated slabs, performing finishing rolling on the roughing rolled slabs, and coiling the finishing rolled steel sheets at a coiling temperature of 400°C to 650°C, hot-rolled steel sheets having a thickness of 2.3 mm were manufactured. Subsequently, by performing softening treatment on some of the hot-rolled steel sheets using a batch treatment under the condition that the treatment temperature was 600°C and the treatment time was 5 hours, pickling the softening treated steel sheets, and performing cold rolling on the pickled steel sheets, cold-rolled steel sheets having a thickness of 1.4 mm were manufactured. And then the cold-rolled steel sheets were subjected to annealing. Also, some of the hot-rolled steel sheets having a thickness of 2.3 mm were pickled and directly subjected to annealing. By performing annealing on the hot-rolled or cold-rolled steel sheets using a continuous galvanizing line under the conditions given in Tables 2 and 3, dipping the annealed steel sheets in a galvanizing bath having a temperature of 460°C in order to forming a coated layer having a coating weight of 35 to 45 g/m², and cooling the galvanized steel sheets at a cooling rate of 10°C/s, galvanized steel sheets 1 through 29 were manufactured. By further heating some of the galvanized steel sheets up to a temperature of 525°C in order to perform alloying treatment, and cooling the alloying treated steel sheets at a cooling rate of 10°C/s, galvannealed steel sheets were manufactured. Subsequently, using the obtained galvanized steel sheets, the area ratios of polygonal ferrite phase, bainitic ferrite phase, martensite phase, tempered martensite phase, and retained austenite phase, and an average prior-austenite phase grain diameter were determined by the above-mentioned method. In addition, using JIS No. 5 tensile test pieces cut out of the galvanized steel sheets in the direction at a right angle to the rolling direction, tensile test was performed at a strain rate of 10⁻³. Moreover, using test pieces of 150 mm × 150 mm cut out of the galvanized steel sheets, hole expansion test was performed in accordance with JFST 1001 (The Japan Iron and Steel Federation Standard, 2008) three times in order to determine an average hole expansion ratio (%), and then stretch flangeability was evaluated. The results are given in Tables 4 and 5.

**[Table 1]**

| Steel | Chemical Composition (mass%) | | | | | | | | | | | | | | | | | Ac₁ Transformation Point (°C) | Ac₃ Transformation Point (°C) | Ms Transformation Point (°C) | Note |
|---|---|---|---|---|---|---|---|---|---|---|---|---|---|---|---|---|---|---|---|---|---|
| | C | Si | Mn | P | S | Al | N | Cr | Mo | V | Ni | Cu | Ti | Nb | B | Ca | REM | | | | |
| A | 0.13 | 1.9 | 2.8 | 0.030 | 0.003 | 0.030 | 0.003 | - | - | - | - | - | - | - | - | - | - | 748 | 871 | 372 | Example Steel |
| 6 | 0.32 | 1.4 | 2.0 | 0.017 | 0.003 | 0.031 | 0.003 | - | - | - | - | - | - | - | - | - | - | 742 | 822 | 343 | Example Steel |
| C | 0.25 | 1.0 | 2.5 | 0,018 | 0,004 | 0.450 | 0.002 | - | - | - | - | - | - | - | - | - | - | 725 | 971 | 352 | Example Steel |
| D | 0.18 | 1.5 | 3.0 | 0.017 | 0.001 | 0.027 | 0.003 | - | - | - | - | - | - | - | - | - | - | 735 | 824 | 351 | Example Steel |
| E | 0.24 | 1.5 | 2.3 | 0.022 | 0.002 | 0.035 | 0.001 | 0.5 | - | - | - | - | - | - | - | - | - | 750 | 833 | 348 | Example Steel |
| F | 0.23 | 1.3 | 2.1 | 0.023 | 0.002 | 0.033 | 0.003 | - | 0.2 | - | - | - | - | - | - | - | - | 738 | 844 | 371 | Example Steel |
| G | 0.15 | 1.7 | 2,6 | 0.016 | 0.002 | 0.031 | 0.002 | - | - | 0.3 | - | - | - | - | - | - | - | 745 | 884 | 364 | Example Steel |
| H | 0.11 | 1.5 | 3.7 | 0.011 | 0.003 | 0.029 | 0.003 | - | - | - | 0.3 | - | - | - | - | - | - | 722 | 813 | 342 | Example Steel |
| I | 0.16 | 0.8 | 2.2 | 0.008 | 0.001 | 0.030 | 0.002 | - | - | - | - | 0.1 | - | - | - | - | - | 723 | 814 | 396 | Example Steel |
| J | 0.18 | 1.7 | 2.9 | 0.015 | 0.002 | 0.017 | 0.001 | - | - | - | - | - | - | 0.05 | - | - | - | 741 | 830 | 352 | Example Steel |
| K | 0.24 | 2.2 | 2.7 | 0.018 | 0.003 | 0.038 | 0.003 | - | - | - | - | - | 0.03 | - | 0.0025 | - | - | 758 | 856 | 334 | Example Steel |
| L | 0.17 | 1,5 | 2.8 | 0.018 | 0.005 | 0.035 | 0.004 | - | - | - | - | - | 0,03 | - | 0.0012 | 0.003 | - | 737 | 836 | 362 | Example Steel |
| M | 0.19 | 1.6 | 2.9 | 0,016 | 0,003 | 0.036 | 0.002 | - | - | - | - | - | 0.02 | - | 0.0005 | - | 0.002 | 739 | 832 | 350 | Example Steel |
| N | 0.09 | 1.2 | 2.3 | 0.021 | 0.001 | 0.029 | 0.002 | - | - | - | - | - | - | - | - | - | - | 733 | 860 | 413 | Comparative Example Steel |
| O | 0.15 | 0.4 | 2.6 | 0.019 | 0.002 | 0.045 | 0.003 | - | - | - | - | - | - | - | - | - | - | 707 | 803 | 389 | Comparative Example Steel |
| P | 0.12 | 1.5 | 1.4 | 0.025 | 0.003 | 0.033 | 0.003 | - | - | - | - | - | - | - | - | - | - | 752 | 895 | 436 | Comparative Example Steel |
| Q | 0.13 | 1,2 | 4.2 | 0.017 | 0.002 | 0.031 | 0.002 | - | - | - | - | - | - | - | - | - | - | 713 | 789 | 323 | Comparative Example Steel |

**[Table 2]**

| Galvaniz ed Steel Sheet No. | Steel | Coiling Temperature (°C) | Execution of Batch Treatment | Execution of Cold Rolling | Annealing Condition | | | | | | | Execution of Alloying Treatment | Note |
|---|---|---|---|---|---|---|---|---|---|---|---|---|---|
| | | | | | Average Heating Rate (°C/s) | Heating Temperature (°C) | Holding Time at Heating (s) | Average Cooling Rate (°C/s) | Cooling Stop Temperature(°C) (°C) | Reheating Temperature (°C) | Holding Time at Reheating (s) | | |
| 1 | A | 650 | No | Yes | 8 | 890 | 60 | 30 | 330 | 470 | 120 | Yes | Example |
| 2 | | 650 | No | Yes | 8 | 820 | 60 | 30 | 330 | 470 | 120 | Yes | Comparative Example |
| 3 | | 650 | No | Yes | 8 | 890 | 5 | 30 | 330 | 470 | 120 | Yes | Comparative Example |
| 4 | | 650 | No | Yes | 8 | 890 | 60 | 30 | 380 | 470 | 120 | Yes | Comparative Example |
| 5 | B | 600 | No | No | 10 | 850 | 90 | 100 | 280 | 410 | 200 | Yes | Example |
| 6 | | 600 | No | No | 10 | 850 | 90 | 5 | 270 | 410 | 200 | Yes | Comparative Example |
| 7 | | 600 | No | No | 10 | 850 | 90 | 100 | 280 | 530 | 200 | Yes | Comparative Example |
| 8 | | 600 | No | No | 10 | 850 | 90 | 100 | 280 | 410 | 700 | Yes | Comparative Example |
| 9 | C | 550 | No | No | 6 | 960 | 120 | 15 | 300 | 450 | 100 | Yes | Example |
| 10 | | 550 | No | No | 6 | 960 | 120 | 15 | 300 | 450 | 3 | Yes | Comparative Example |
| 11 | | 550 | No | No | 6 | 960 | 120 | 15 | 200 | 450 | 100 | Yes | Comparative Example |
| 12 | D | 550 | Yes | Yes | 5 | 850 | 150 | 20 | 300 | 430 | 120 | No | Example |
| 13 | | 550 | Yes | Yes | 2 | 850 | 150 | 20 | 310 | 430 | 80 | No | Comparative Example |
| 14 | E | 450 | Yes | Yes | 9 | 900 | 70 | 50 | 270 | 400 | 300 | Yes | Example |
| 15 | | 450 | Yes | Yes | 4 | 900 | 70 | 50 | 280 | 410 | 300 | Yes | Comparative Example |
| 16 | | 450 | Yes | Yes | 9 | 900 | 70 | 50 | 270 | 330 | 300 | Yes | Comparative Example |

**[Table 3]**

| Galvaniz ed Steel Sheet No. | Steel | Coiling Temperature (°C) | Execution of Batch Treatment | Execution of Cold Rolling | Annealing Condition | | | | | | | Execution of Alloying Treatment | Note |
|---|---|---|---|---|---|---|---|---|---|---|---|---|---|
| | | | | | Average Heating Rate (°C/s) | Heating Temperature (°C) | Holding Time at Heating (s) | Average Cooling Rate (°C/s) | Cooling Stop Temperature (C) | Reheating Temperature (°C) | Holding Time at Reheating (s) | | |
| 17 | F | 650 | No | Yes | 12 | 890 | 400 | 50 | 330 | 480 | 150 | Yes | Example |
| 18 | | 450 | Yes | Yes | 12 | 890 | 400 | 50 | 300 | 480 | 150 | Yes | Example |
| 19 | G | 650 | Yes | Yes | 8 | 900 | 60 | 80 | 300 | 450 | 120 | No | Example |
| 20 | H | 600 | Yes | Yes | 5 | 860 | 40 | 80 | 270 | 400 | 50 | No | Example |
| 21 | I | 600 | No | Yes | 8 | 890 | 120 | 50 | 350 | 420 | 20 | Yes | Example |
| 22 | J | 400 | Yes | Yes | 7 | 900 | 150 | 15 | 280 | 360 | 70 | Yes | Example |
| 23 | K | 450 | Yes | Yes | 8 | 900 | 50 | 70 | 280 | 400 | 120 | Yes | Example |
| 24 | L | 500 | Yes | Yes | 8 | 880 | 60 | 30 | 300 | 400 | 40 | Yes | Example |
| 25 | M | 500 | Yes | Yes | 7 | 850 | 60 | 80 | 300 | 460 | 50 | Yes | Example |
| 26 | N | 500 | Yes | Yes | 7 | 950 | 75 | 80 | 340 | 400 | 50 | Yes | Comparative Example |
| 27 | O | 500 | Yes | Yes | 10 | 850 | 75 | 40 | 320 | 400 | 50 | Yes | Comparative Example |
| 28 | P | 500 | Yes | Yes | 10 | 910 | 75 | 50 | 370 | 400 | 50 | Yes | Comparative Example |
| 29 | Q | 500 | Yes | Yes | 10 | 820 | 75 | 30 | 250 | 400 | 50 | Yes | Comparative Example |

**[Table 4]**

| Galvanized Steel Sheet No. | Microstructure* | | | | | | | Tensile Property | | | | λ (%) | Note |
|---|---|---|---|---|---|---|---|---|---|---|---|---|---|
| | PF Area Ratio (%) | BF Area Ratio (%) | M Area Ratio (%) | Tempered M Area Ratio (%) | Retained γ Area Ratio (%) | Other | Prior-γ Average Grain Diameter (µm) | YS (MPa) | TS (MPa) | EL (%) | YR (%) | | |
| 1 | 0 | 32 | 13 | 37 | 14 | P | 12 | 775 | 1308 | 16 | 59 | 35 | Example |
| 2 | 15 | 18 | 30 | 27 | 10 | - | 13 | 706 | 1342 | 12 | 53 | 20 | Comparative Example |
| 3 | 8 | 26 | 32 | 25 | 8 | P | 12 | 710 | 1367 | 11 | 52 | 14 | Comparative Example |
| 4 | 0 | 19 | 75 | 0 | 6 | - | 12 | 883 | 1460 | 7 | 60 | 33 | Comparative Example |
| 5 | 0 | 25 | 9 | 46 | 12 | P | 9 | 801 | 1261 | 19 | 64 | 47 | Example |
| 6 | 18 | 18 | 40 | 15 | 3 | P | 10 | 728 | 1411 | 8 | 52 | 10 | Comparative Example |
| 7 | 0 | 4 | 19 | 50 | 7 | P | 10 | 756 | 1335 | 13 | 57 | 39 | Comparative Example |
| 8 | 0 | 27 | 1 | 49 | 2 | P | 9 | 913 | 1146 | 9 | 80 | 73 | Comparative Example |
| 9 | 5 | 11 | 18 | 40 | 13 | P | 13 | 680 | 1309 | 14 | 52 | 31 | Example |
| 10 | 4 | 1 | 50 | 42 | 3 | - | 14 | 786 | 1422 | 7 | 55 | 5 | Comparative Example |
| 11 | 4 | 3 | 2 | 79 | 6 | P | 13 | 1029 | 1212 | 8 | 85 | 69 | Comparative Example |
| 12 | 0 | 28 | 8 | 43 | 10 | P | 14 | 697 | 1234 | 18 | 56 | 37 | Example |
| 13 | 0 | 16 | 15 | 36 | 10 | P | 19 | 696 | 1246 | 16 | 56 | 22 | Comparative Example |
| 14 | 0 | 17 | 11 | 57 | 14 | P | 9 | 732 | 1270 | 18 | 58 | 37 | Example |
| 15 | 0 | 8 | 16 | 50 | 8 | P | 38 | 715 | 1281 | 16 | 56 | 28 | Comparative Example |
| 16 | 0 | 4 | 21 | 57 | 5 | P | 9 | 755 | 1371 | 13 | 55 | 19 | Comparative Example |

| | | | | | | | | | | | | | |
|---|---|---|---|---|---|---|---|---|---|---|---|---|---|
| *: PF; polygonal ferrite, M; martensite, γ; austenite, P; pearlite, BF; bainitic ferrite | | | | | | | | | | | | | |

**[Table 5]**

| Galvanized Steel Sheet No. | Microstructure* | | | | | | | Tensile Property | | | | λ (%) | Note |
|---|---|---|---|---|---|---|---|---|---|---|---|---|---|
| | PF Area Ratio (%) | BF Area Ratio (%) | M Area Ratio (%) | Tempered M Area Ratio (%) | Retained γ Area Ratio (%) | Other | Prior-γ Average Grain Diameter (µm) | YS (MPa) | TS (MPa) | EL (%) | YR (%) | | |
| 17 | 0 | 26 | 17 | 37 | 13 | P | 7 | 699 | 1319 | 17 | 53 | 34 | Example |
| 18 | 0 | 28 | 6 | 56 | 10 | - | 7 | 774 | 1257 | 15 | 62 | 51 | Example |
| 19 | 0 | 29 | 10 | 50 | 11 | - | 11 | 737 | 1278 | 16 | 58 | 38 | Example |
| 20 | 0 | 21 | 12 | 57 | 10 | - | 11 | 729 | 1259 | 15 | 58 | 49 | Example |
| 21 | 0 | 33 | 8 | 40 | 9 | P | 8 | 748 | 1192 | 14 | 63 | 58 | Example |
| 22 | 3 | 24 | 6 | 49 | 12 | P | 12 | 714 | 1216 | 18 | 59 | 35 | Example |
| 23 | 0 | 17 | 15 | 45 | 16 | P | 11 | 828 | 1351 | 17 | 61 | 40 | Example |
| 24 | 0 | 19 | 10 | 50 | 10 | P | 10 | 718 | 1210 | 17 | 59 | 46 | Example |
| 25 | 0 | 21 | 16 | 43 | 11 | P | 10 | 730 | 1244 | 18 | 59 | 38 | Example |
| 26 | 0 | 23 | 2 | 58 | 7 | P | 11 | 785 | 1123 | 13 | 70 | 60 | Comparative Example |
| 27 | 0 | 27 | 5 | 51 | 2 | P | 8 | 741 | 1171 | 12 | 63 | 46 | Comparative Example |
| 28 | 0 | 34 | 2 | 44 | 6 | P | 8 | 706 | 1139 | 15 | 62 | 40 | Comparative Example |
| 29 | 0 | 15 | 22 | 57 | 6 | - | 6 | 694 | 1289 | 12 | 54 | 32 | Comparative Example |

| | | | | | | | | | | | | | |
|---|---|---|---|---|---|---|---|---|---|---|---|---|---|
| *: PF; polygonal ferrite, M; martensite, γ; austenite, P; pearlite, BF; bainitic ferrite | | | | | | | | | | | | | |

In the case of the examples of the present invention, since YR is 70% or less, it is clarified that the examples have excellent shape fixability. In addition, since the examples have a TS of 1180 MPa or more, an EL of 14% or more, and a λ of 30% or more, it is clarified that the examples have high strength and excellent formability. Therefore, according to the present invention, since a galvanized steel sheet with excellent shape fixability can be obtained, there is an excellent effect for contributing to an increase in the performance of automobile bodies as a result of contributing to the weight reduction of automobiles.

### [Industrial Applicability]

According to the present invention, a high-strength galvanized steel sheet with excellent formability and shape fixability which has a tensile strength (TS) of 1180 MPa or more, a total elongation (EL) of 14% or more, a hole expansion ratio (λ) of 30% or more, and a yield ratio (YR) of 70% or less can be obtained. Using the high-strength galvanized steel sheet according to the present invention for the automobile parts, there is a significant contribution to an increase in the performance of automobile bodies as a result of contributing to the weight reduction of automobiles.

## Claims

1. A high-strength galvanized steel sheet with excellent formability and shape fixability,
the steel sheet having a chemical composition consisting of, by mass%, C: 0.10% or more and 0.35% or less, Si: 0.5% or more and 3.0% or less, Mn: 1.5% or more and 4.0% or less, P: 0.100% or less, S: 0.02% or less, Al: 0.010% or more and 0.5% or less, and optionally further containing, by mass%, any one or more of:
at least one chemical element selected from Cr: 0.005% or more and 2.00% or less, Mo: 0.005% or more and 2.00% or less, V: 0.005% or more and 2.00% or less, Ni: 0.005% or more and 2.00% or less, and Cu: 0.005% or more and 2.00% or less;
at least one chemical element selected from Ti: 0.01% or more and 0.20% or less, and Nb: 0.01% or more and 0.20% or less;
B: 0.0005% or more and 0.0050% or less; and
at least one chemical element selected from Ca: 0.001% or more and 0.005% or less, and REM: 0.001% or more and 0.005% or less,
the balance being Fe and inevitable impurities;
the steel sheet having a microstructure consisting of, in terms of area ratio, 0% or more and 5% or less of polygonal ferrite phase, 5% or more of bainitic ferrite phase, 5% or more and 20% or less of martensite phase, 30% or more and 60% or less of tempered martensite phase, 5% or more and 20% or less of retained austenite phase, and optionally pearlite,
wherein an average prior-austenite grain diameter is between 5 µm and 15 µm, and the steel sheet has a tensile strength of 1180MPa or more and a yield ratio of 70% or less.

2. The high-strength galvanized steel sheet with excellent formability and shape fixability according to Claim 1, wherein the galvanized steel sheet is a galvannealed steel sheet.

3. A method for manufacturing the high-strength galvanized steel sheet with excellent formability and shape fixability according to claim 1 or 2, the method comprising;
hot rolling, or further cold rolling, a slab having the chemical composition according to Claim 1 into a rolled steel sheet,
continuous annealing the rolled steel sheet by heating up to (the Ac₃ point - 20°C) or higher and 1000°C or lower at an average heating rate of 5°C/s or more in a temperature range from 500°C to the Ac₁ point, holding at the heating temperature for 10 seconds or more and 1000 seconds or less, cooling down to a cooling stop temperature of (the Ms point - 80°C) or higher and (the Ms point - 30°C) or lower at an average cooling rate of 15°C/s or more in a temperature range of 750°C or lower, reheating up to 350°C or higher and 500°C or lower, and holding at the reheating temperature for 10 seconds or more and 600 seconds or less, and
galvanizing the annealed steel sheet, or further performing alloying treatment on the galvanized steel sheet to produce a galvannealed steel sheet.

## Patentansprüche

1. Hochfestes verzinktes Stahlblech mit ausgezeichneter Formbarkeit und Formfestigkeit,
das Stahlblech aufweisend eine chemische Zusammensetzung bestehend aus, in Massenprozent, C: 0,10 % oder mehr und 0,35 % oder weniger, Si: 0,5 % oder mehr und 3,0 % oder weniger, Mn: 1,5 % oder mehr und 4,0 % oder weniger, P: 0,100 % oder weniger, S: 0,02 % oder weniger, Al: 0,10 % oder mehr und 0,5 % oder weniger, und wahlweise ferner enthaltend, in Massenprozent, einen oder mehrerer der folgenden Bestandteile:
mindestens ein chemisches Element ausgewählt aus Cr: 0,005 % oder mehr und 2,00 % oder weniger, Mo: 0,005 % oder mehr und 2,00 % oder weniger, V: 0,005 % oder mehr und 2,00 % oder weniger, Ni: 0,005 % oder mehr und 2,00 % oder weniger, und Cu: 0,005 % oder mehr und 2,00 % oder weniger;
mindestens ein chemisches Element ausgewählt aus Ti: 0,01 % oder mehr und 0,20 % oder weniger, und Nb: 0,01 % oder mehr und 0,20 % oder weniger;
B: 0,0005 % oder mehr und 0,0050 % oder weniger; und
mindestens ein chemisches Element ausgewählt aus Ca: 0,001 % oder mehr und 0,005 % oder weniger, und REM: 0,001 % oder mehr und 0,005 % oder weniger,
wobei der Ausgleich Fe und unvermeidbare Verunreinigungen sind;
das Stahlblech aufweisend eine Mikrostruktur bestehend aus, ausgedrückt als Flächenverhältnis, 0 % oder mehr und 5 % oder weniger an polygonaler Ferritphase, 5 % oder mehr an bainitischer Ferritphase, 5 % oder mehr und 20 % oder weniger an Martensitphase, 30 % oder mehr und 60 % oder weniger an gehärteter Martensitphase, 5 % oder mehr und 20 % oder weniger an Restaustenitphase, und wahlweise Perlit,
wobei ein durchschnittlicher Voraustenit-Korndurchmesser zwischen 5 µm und 15 µm beträgt, und das Stahlblech eine Zugfestigkeit von 1180 MPa oder mehr und ein Streckgrenzenverhältnis von 70 % oder weniger aufweist.

2. Hochfestes verzinktes Stahlblech mit ausgezeichneter Formbarkeit und Formfestigkeit nach Anspruch 1, wobei das verzinkte Stahlblech ein feuerverzinktes Stahlblech ist.

3. Verfahren zur Herstellung des hochfesten verzinkten Stahlblechs mit ausgezeichneter Formbarkeit und Formfestigkeit nach Anspruch 1 oder 2, das Verfahren umfassend;
Warmwalzen, oder weiteres Kaltwalzen, wobei ein Barren die chemische Zusammensetzung nach Anspruch 1 aufweist, in ein gewalztes Stahlblech,
Durchlaufglühen des gewalzten Stahlblechs durch Aufheizen auf (den Ac₃-Punkt - 20 °C) oder höher und 1000 °C oder niedriger bei einer durchschnittlichen Aufheizgeschwindigkeit von 5 °C/s oder mehr in einem Temperaturbereich von 500 °C bis zum Ac₁-Punkt, Halten der Aufheiztemperatur für 10 Sekunden oder mehr und 1000 Sekunden oder weniger, Abkühlen auf eine Abkühlstopptemperatur von (den Ms-Punkt - 80 °C) oder höher und (den Ms-Punkt - 30 °C) oder niedriger bei einer durchschnittlichen Abkühlgeschwindigkeit von 15 °C/s oder mehr in einem Temperaturbereich von 750 °C oder niedriger, Wiederaufheizen auf 350 °C oder höher und 500 °C oder niedriger, und Halten der Wiederaufheiztemperatur für 10 Sekunden oder mehr und 600 Sekunden oder weniger, und
Verzinken des geglühten Stahlblechs, oder zusätzliches Durchführen einer Legierungsbehandlung des verzinkten Stahlblechs, um ein feuerverzinktes Stahlblech herzustellen.

## Revendications

1. Une tôle d'acier galvanisé à haute résistance avec une excellente aptitude au formage et à la fixation de forme,
la tôle d'acier ayant une composition chimique constituée de, par % en poids, C : 0,10 % ou plus et 0,35 % ou moins, Si : 0,5 % ou plus et 3,0 % ou moins, Mn : 1,5 % ou plus et 4,0 % ou moins, P : 0,100 % ou moins, S : 0,02 % ou moins, Al : 0,010 % ou plus et 0,5 % ou moins, et contenant éventuellement en outre, par % en poids, un ou plusieurs de :
au moins un élément chimique choisi parmi Cr : 0,005 % ou plus et 2,00 % ou moins, Mo : 0,005 % ou plus et 2,00 % ou moins, V : 0,005 % ou plus et 2,00 % ou moins, Ni : 0,005 % ou plus et 2,00 % ou moins, et Cu : 0,005 % ou plus et 2,00 % ou moins ;
au moins un élément chimique choisi parmi Ti : 0,01 % ou plus et 0,20 % ou moins, et Nb : 0,01 % ou plus et 0,20 % ou moins ;
B : 0,0005 % ou plus et 0,0050 % ou moins ; et
au moins un élément chimique choisi parmi Ca : 0,001 % ou plus et 0,005 % ou moins, et REM : 0,001 % ou plus et 0,005 % ou moins,
le reste étant du Fe et des impuretés inévitables ;
la tôle d'acier ayant une microstructure constituée, en termes de rapport de surface, 0 % ou plus et 5 % ou moins de phase de ferrite polygonale, 5 % ou plus de phase de ferrite bainitique, 5 % ou plus et 20 % ou moins de phase de martensite, 30 % ou plus et 60 % ou moins de phase martensite trempée, 5 % ou plus et 20 % ou moins de phase d'austénite retenue et éventuellement de la perlite,
dans laquelle le diamètre moyen des grains d'austénite préalable est compris entre 5 µm et 15 µm, et la tôle d'acier a une résistance à la traction de 1180 MPa ou plus et un rapport de rendement de 70 % ou moins.

2. La tôle d'acier galvanisé à haute résistance avec une excellente aptitude au formage et à la fixation de forme selon la revendication 1, dans laquelle la tôle d'acier galvanisé est une tôle d'acier recuite par galvanisation.

3. Un procédé de fabrication de la tôle d'acier galvanisé à haute résistance avec une excellente aptitude au formage et à la fixation de forme selon la revendication 1 ou 2, le procédé comprenant ;
le laminage à chaud, ou le laminage à froid supplémentaire, d'une brame ayant la composition chimique selon la revendication 1 en une tôle d'acier laminée,
le recuit continu de la tôle d'acier laminée par chauffage jusqu'au (point Ac₃ - 20 °C) ou plus et 1000 °C ou moins à une vitesse de chauffage moyenne de 5 °C/s ou plus dans une plage de température allant de 500 °C au point Ac₁, le maintien à la température de chauffage pendant 10 secondes ou plus et 1 000 secondes ou moins, le refroidissement jusqu'à une température d'arrêt du refroidissement égale ou supérieure au (point Ms - 80 °C) et égale ou inférieure au (point Ms - 30 °C) à une vitesse de refroidissement moyenne de 15 °C/s ou plus dans une plage de température égale ou inférieure à 750 °C, le réchauffement jusqu'à 350 °C ou plus et 500 °C ou moins, et le maintien à la température de réchauffement pendant 10 secondes ou plus et 600 secondes ou moins, et
la galvanisation de la tôle d'acier recuite, ou le traitement d'alliage supplémentaire effectué sur la tôle d'acier galvanisé pour produire une tôle d'acier recuite par galvanisation.
